# EUROPÄISCHE PATENTSCHRIFT

(11) **EP 2 614 751 B1**
(45) Veröffentlichungstag und Bekanntmachung des Hinweises auf die Patenterteilung: **22.05.2019**
(21) Anmeldenummer: 13150256.9
(22) Anmeldetag: 04.01.2013
(51) Int. Cl.: B60N 2/815, B60N 2/826, A47C 7/38

(54) **Haltevorrichtung für eine Kopfstütze**
Holding device for a headrest
Dispositif de retenue pour un repose-tête

(30) Priorität: 11.01.2012 DE 102012100200
(43) Veröffentlichungstag der Anmeldung: 17.07.2013
(73) Patentinhaber: Hettich Franke GmbH & Co. KG, 72336 Balingen-Weilstetten (DE)
(72) Erfinder: STAUß, Gerd, 72474 Winterlingen (DE); GRATHWOL, Steffen, 72336 Balingen (DE); WIRTHS, Dr. Dieter, 32120 Hiddenhausen (DE)
(74) Vertreter: Dantz, Jan Henning

(56) Entgegenhaltungen:
- FR-A1- 2 578 299
- FR-A1- 2 824 115
- JP-U- H0 271 352
- JP-U- H0 513 251
- JP-U- S59 106 457

## Beschreibung

Die vorliegende Erfindung betrifft eine Haltevorrichtung für eine Kopfstütze, mit einer Klemmhülse, in die ein Stab einer Kopfstütze einsteckbar ist, wobei an der Klemmhülse mindestens eine radial bewegbare Klemmbacke zum Festklemmen des Stabes ausgebildet ist.

Die DE 299 22 104 offenbart einen Mechanismus zum stufenlosen Höhenverstellen einer Kopfstütze, bei dem ein Stab eines Bügels an einer Spannzange gehalten ist. Die Spannzange ist dabei durch eine Feder in einem Gehäuse vorgespannt und kann die Kopfstütze in einer gewünschten Höhe fixieren. Zum Verstellen wird dann der Mechanismus über einen Hebel entriegelt. Der gezeigte Rastmechanismus umfasst eine Vielzahl von Bauteilen und ist daher vergleichsweise aufwändig in der Herstellung und der Montage.

Die DE 10 2005 006 116 offenbart eine Feststellvorrichtung für eine Kopfstütze, bei der ein Klemmmechanismus vorgesehen ist, der über einen Bowdenzug betätigbar ist. Die Klemmmittel können die Kopfstütze in der gewünschten Höhe fixieren. Auch bei dieser Verstellvorrichtung sind zahlreiche Bauteile zum Verstellen der Kopfstütze notwendig, so dass ein Einsatz kostenintensiv ist und für Möbel zu aufwändig ist.

Die JP H05 13251 U offenbart eine Haltevorrichtung für eine Kopfstütze, bei der an einem Ring ein Stift in radiale Richtung verschiebbar ist. Der Stift kann in einzelne Aussparungen an einem vertikalen Stab einer Kopfstütze einrasten, so dass in gewissen Stufen eine Höhenverstellung der Kopfstütze möglich ist.

Die FR 28 24 115 A1 offenbart eine Haltevorrichtung für eine Kopfstütze, bei der eine Hülse in axiale Richtung bewegbar ist, um einen Verstellmechanismus zu verriegeln oder zu entriegeln. Die Hülse ist dabei durch eine Feder vorgespannt.

Die FR 25 78 299 offenbart einen Klemmmechanismus für einen Stab einer Kopfstütze, wobei hierfür eine Feder zwischen einem stationären Bauteil und einer drehbaren Hülse eingespannt ist. Die Feder ist als Schraubenfeder ausgebildet, wobei je ein Ende an dem stationären Bauteil und das gegenüberliegende an der Hülse abgestützt ist. Durch Drehen der Hülse kann die Klemmung eines Stabes aufgehoben werden.

Die JP H02 71352 U offenbart einen Verstellmechanismus für einen Stab, wobei hierfür eine Hülse an einem äußeren Umfang mit Rastmitteln vorgesehen ist, und durch Eindrücken der Hülse in eine entsprechende Aufnahme eine Klemmung des Stabes erfolgen kann.

Es ist daher Aufgabe der vorliegenden Erfindung, eine Haltevorrichtung für eine Kopfstütze zu schaffen, die einfach aufgebaut ist und eine stufenlose Höhenverstellen der Kopfstütze ermöglicht.

Diese Aufgabe wird mit einer Haltevorrichtung für eine Kopfstütze mit den Merkmalen des Anspruches 1 gelöst.

Die erfindungsgemäße Haltevorrichtung umfasst eine Klemmhülse und einen drehbaren Klemmring, der in eine nutförmige Aufnahme zwischen der mindestens einen Klemmbacke und einer Stütze der Klemmhülse eingefügt ist und durch Drehen die mindestens eine Klemmbacke radial zum Festklemmen eines Stabes bewegt oder mit einer Klemmkraft beaufschlagt. Dadurch kann durch eine Drehbewegung des Klemmringes eine Fixierung eines Stabes an der Klemmhülse erfolgen, so dass der Stab stufenlos entlang der Klemmhülse verstellbar ist. Zudem kann die Klemmkraft durch die Klemmbacke auf den Stab eingestellt werden, um an die zu erwartende Belastung angepasst zu werden.

Gemäß der Erfindung weist der Klemmring Abschnitte unterschiedlicher Dicke auf und durch Drehen des Klemmringes ist die mindestens eine Klemmbacke radial bewegbar. Durch die unterschiedlich dicken Abschnitte können unterschiedlich große Klemmkräfte durch die Klemmbacke erzeugt werden, die dann durch die Abschnitte gegen den Stab gedrückt wird. Dabei können die Abschnitte stufenförmig angeordnet sein, um in Stufen die Klemmkraft zu erhöhen oder zu reduzieren. Alternativ kann der Abschnitt des Klemmringes auch keilförmig ausgebildet sein, so dass die Klemmkraft beim Drehen des Klemmringes kontinuierlich verstärkt oder verringert wird.

Es sind mehrere Klemmbacken vorgesehen, beispielsweise drei Klemmbacken, die zusammen über den Klemmring bewegbar sind. Dadurch kann mit einem einzigen Klemmring ein Festklemmen des Stabes an der Klemmhülse erfolgen, wobei über den Klemmring zwei oder mehr Klemmbacken betätigbar sind.

Vorzugsweise ist der Klemmring an einer Abdeckkappe ausgebildet, die eine Öffnung zur Durchführung des Stabes aufweist. Die Abdeckkappe kann dabei an der Klemmhülse verrastet sein, wobei die Haltevorrichtung im einfachsten Fall aus zwei Bauteilen gebildet ist, nämlich der Klemmhülse und der Abdecckappe mit dem Klemmring. Die Abdeckkappe übernimmt neben der optischen Funktion auch die Einstellung der Klemmkraft.

Für eine exakte Führung des Stabes entlang der Klemmhülse weist diese axial beabstandet von der mindestens einen Klemmbacke einen im Wesentlichen zylindrischen Führungsabschnitt auf. Dieser Führungsabschnitt kann an einem gegenüberliegenden Ende zu einem Kopfabschnitt mit den Klemmbacken angeordnet sein. Dadurch wird nach der Fixierung des Stabes eine Neigung relativ zur Längsachse der Klemmhülse weitgehend vermieden.

Für eine einfache Montage der Klemmhülse kann diese radial biegbare Raststege aufweisen, die beim Einstecken der Klemmhülse in eine Öffnung in einer Leiste diese Leiste hintergreifen. Die Raststege können dann nach dem Einstecken des Stabes gesichert sein, so dass ein Herausziehen der Klemmhülse verhindert wird.

Für eine sichere Fixierung der Klemmhülse kann diese an einem Mittelabschnitt radial nach außen hervorstehende Rippen aufweisen, die klemmend in einer Öffnung einer Leiste eingreifen, beispielsweise formschlüssig in die Öffnung eingefügt sind. Dadurch werden Kippbewegungen des Stabes relativ zu der Klemmhülse vermieden.

Erfindungsgemäß wird auch eine Kopfstütze bereitgestellt, bei der mindestens zwei Stäbe über eine Haltevorrichtung festgelegt sind, beispielsweise an einer Leiste eines Möbels. Die Stäbe können dabei zylindrisch ausgebildet sein und stufenlos in der Höhe an den Haltevorrichtungen verstellt werden. Vorzugsweise ist die Leiste mit einem Bezugsstoff gepolstert und die Kopfstütze sowie die Haltevorrichtung werden für ein Sitzmöbel, beispielsweise einen Sessel oder ein Sofa, eingesetzt. Die erfindungsgemäße Haltevorrichtung ist dabei so ausgestaltet, dass Bezugsstoffe unterschiedlicher Dicke an der Leiste verarbeitet werden können, ohne dass Probleme bei der Fixierung der Kopfstütze auftreten. Eine Verwendung aller derzeit bekannten Bezugsmaterialien, wie beispielsweise Leder, wattierte Stoffe, Cord, Samt und Seide, wird durch die Nutzung der erfindungsgemäßen Haltevorrichtung ermöglicht.

Neben einer zylindrischen Ausführung der Stäbe ist auch eine Ausführung der Stäbe als Polygon, bevorzugt als Achteck denkbar.

Die Erfindung wird nachfolgend anhand eines Ausführungsbeispiels mit Bezug auf die beigefügten Zeichnungen näher erläutert. Es zeigen:

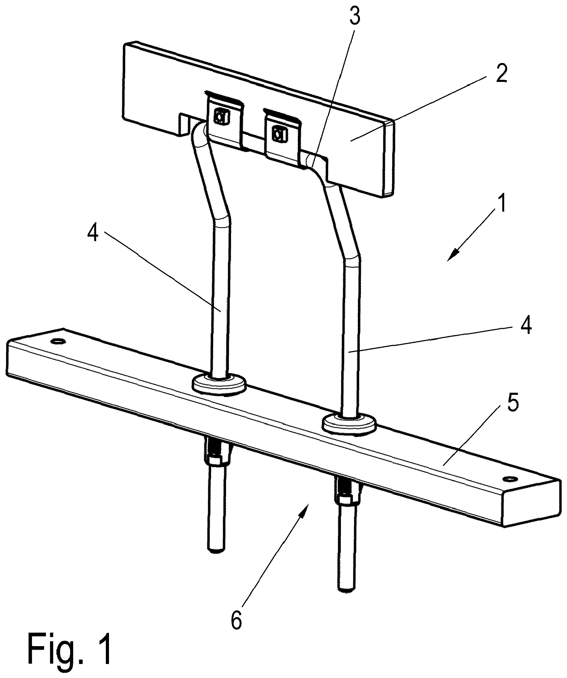

- Figur 1: eine perspektivische Ansicht einer Kopfstütze mit zwei erfindungsgemäßen Haltevorrichtungen;
- Figur 2: eine Schnittansicht durch die Haltevorrichtung der Figur 1;
- Figur 3: eine perspektivische Ansicht einer Klemmhülse der Haltevorrichtung der Figur 2;
- Figuren 4A bis 4F: mehrere Ansichten der Klemmhülse der Figur 3, und
- Figuren 5A bis 5F: mehrere Ansichten einer Abdeckkappe der Haltevorrichtung der Figur 2.

Ein Sitz 1, beispielsweise bei einem Sofa oder einem Sessel, umfasst eine schematisch dargestellte Kopfstütze 2, die an einem Bügel 3 festgelegt ist. Die Kopfstütze 2 kann in unterschiedlichen Neigungen an dem Bügel 3 fixiert werden und auch an die Kopfform angepasst sein. Zudem kann die Kopfstütze 2 gepolstert passend zu einem Möbel ausgeführt werden.

Der Bügel 3 umfasst zwei zylindrische Stäbe 4, die jeweils über eine Haltevorrichtung 6 an einer Leiste 5 fixiert werden können. Durch die Haltevorrichtung 6 ist die Kopfstütze 2 stufenlos in der Höhe verstellbar.

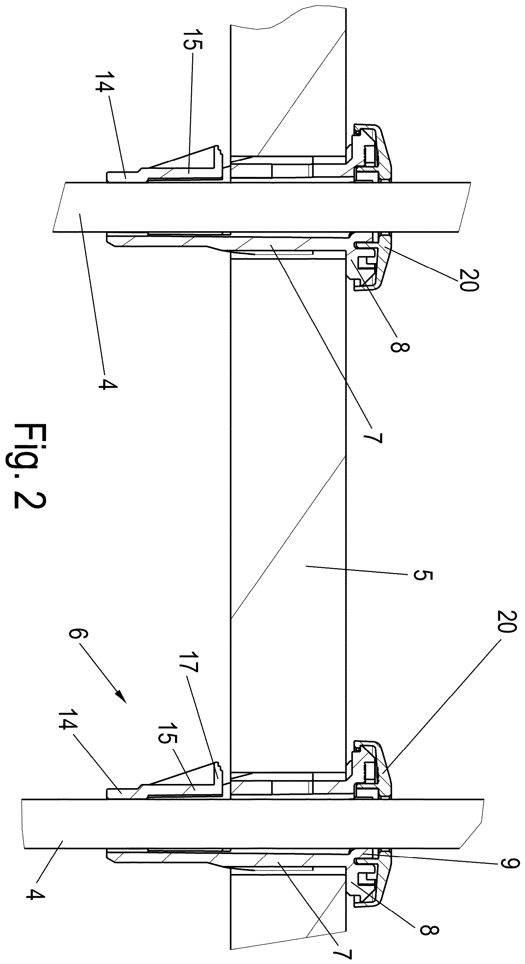

In Figur 2 sind die Haltevorrichtungen 6 im Schnitt dargestellt. Jede Haltevorrichtung 6 umfasst eine Klemmhülse 7 und eine Abdeckkappe 20. Die Klemmhülse 7 umfasst endseitig einen radial hervorstehenden Kopfabschnitt 8, der an einer Oberseite der Leiste 5 aufliegt. Auf der gegenüberliegenden Seite der Klemmhülse 7 ist ein Führungsabschnitt 14 zur Führung des Stabes 4 ausgebildet, an dem biegbare Raststege 15 angeformt sind. Jeder Raststeg 15 umfasst einen radial hervorstehenden Vorsprung 17, der die Unterseite der Leiste 5 hintergreift. Dadurch ist die Klemmhülse 7 über den Kopfabschnitt 8 und die Vorsprünge 17 axial gesichert an der Leiste 5 gehalten. Die Leiste 5 kann dabei mit einem Bezugsstoff bezogen sein, der im Bereich der Öffnungen an der Leiste 5 geschlitzt ist, um die Haltevorrichtung 6 zu montieren.

Zum Festlegen der Kopfstütze 2 an der Haltevorrichtung 6 sind an der Klemmhülse 7 drei radial bewegbare Klemmbacken 9 ausgebildet, die durch Drehen der Abdeckkappe 20 betätigt werden können, um eine Festlegung des Stabes 4 an der Klemmhülse 7 zu bewirken.

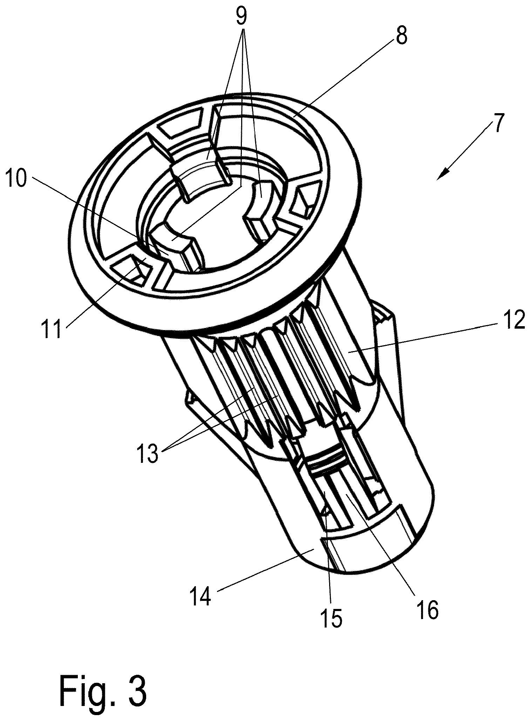

Wie in Figur 3 gezeigt ist, umfasst die Klemmhülse 7 drei Klemmbacken 9, wobei die Anzahl der Klemmbacken 9 variiert werden kann. Zwischen jeder Klemmbacke 9 und einer Stütze 11 an dem Kopfabschnitt 8 ist eine nutförmige Aufnahme 10 vorgesehen, in die ein Wandabschnitt eines Klemmringes 24 eingreift.

Die Klemmhülse 7 umfasst an einem Mittelabschnitt 12 radial hervorstehende Rippen 13, die im Wesentlichen formschlüssig in die Öffnung an der Leiste 5 eingefügt werden können, damit Kippbewegungen der Klemmhülse 7 innerhalb der Leiste 5 vermieden werden. Auf der zu dem Kopfabschnitt 8 gegenüberliegenden Seite ist der Führungsabschnitt 14 mit den Raststegen 15 ausgebildet, wobei jeder Raststeg eine Anlaufschräge 16 aufweist, um das Einfügen der Raststege 15 durch die an der Leiste 5 ausgebildete Öffnung zu erleichtern.

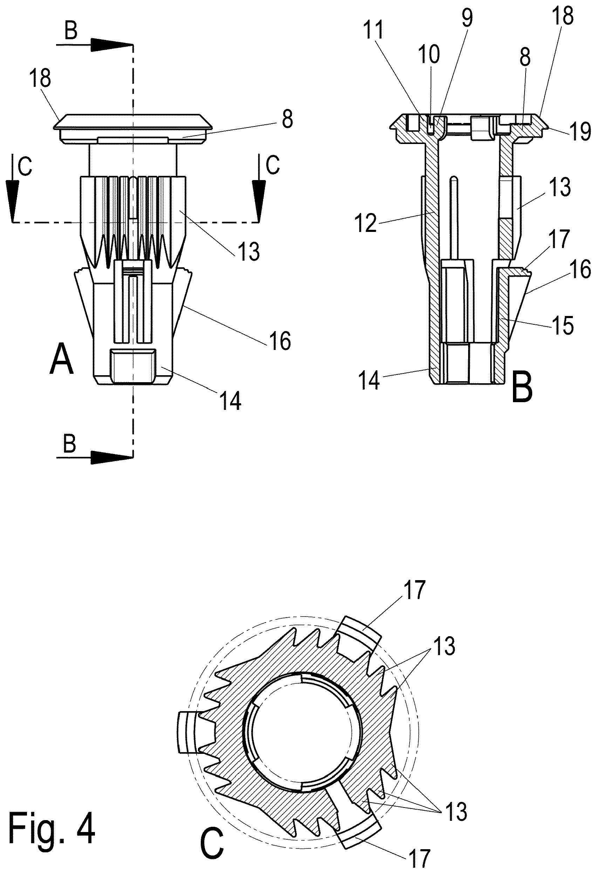

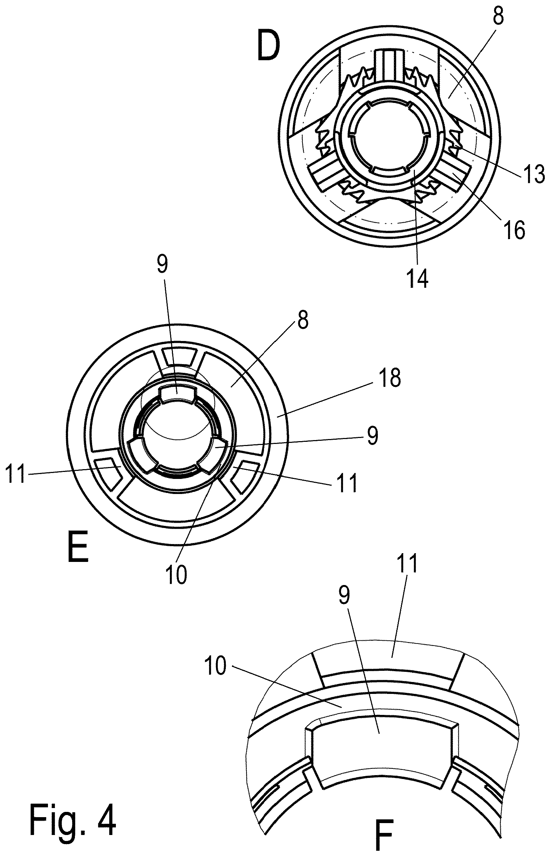

Die Klemmhülse 7 ist im Detail in den Figuren 4A bis 4F dargestellt. An dem Kopfabschnitt 8 sind drei radial nach innen biegbare Klemmbacken 9 ausgebildet, die über einen Klemmring 24 gegen den Stab 4 gedrückt werden können. Der Klemmring 24 wird in eine Nut 10 eingefügt, die zwischen einer Außenseite der Klemmbacken 9 und einer Stütze 11 an dem Kopfabschnitt 8 ausgebildet ist. An dem Kopfabschnitt 8 ist ferner eine Anlaufschräge 18 sowie eine Stufe 19 ausgebildet, an der eine Abdeckkappe 20 der Haltevorrichtung 6 verrastet werden kann.

Wie in Figur 4C gezeigt ist, sind an einem Mittelabschnitt 12 mehrere Rippen 13 ausgebildet, die für eine klemmende Festlegung der Klemmhülse 7 in einer Öffnung der Leiste 5 sorgen können.

Ferner sind die biegbaren Raststege 15 zu erkennen, die beim Einfügen der Klemmhülse 7 in die Leiste 5 nach innen gebogen werden und dann mit dem Vorsprung 17 die Leiste 5 hintergreifen.

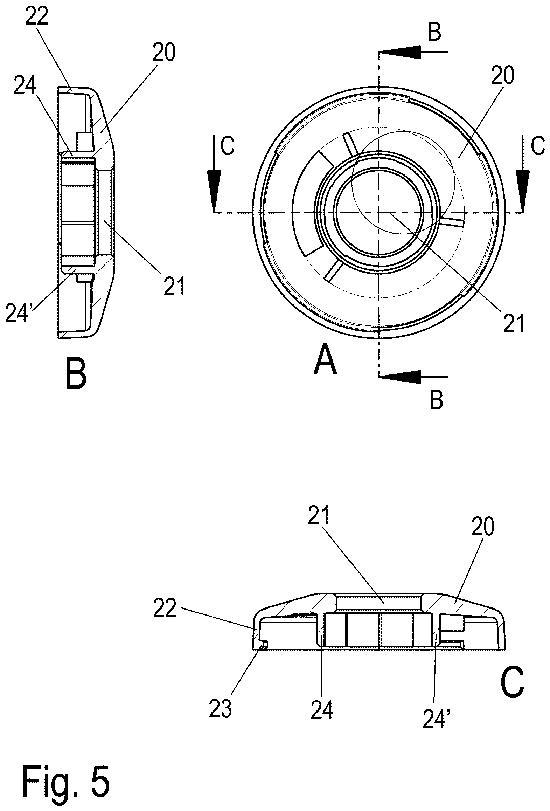

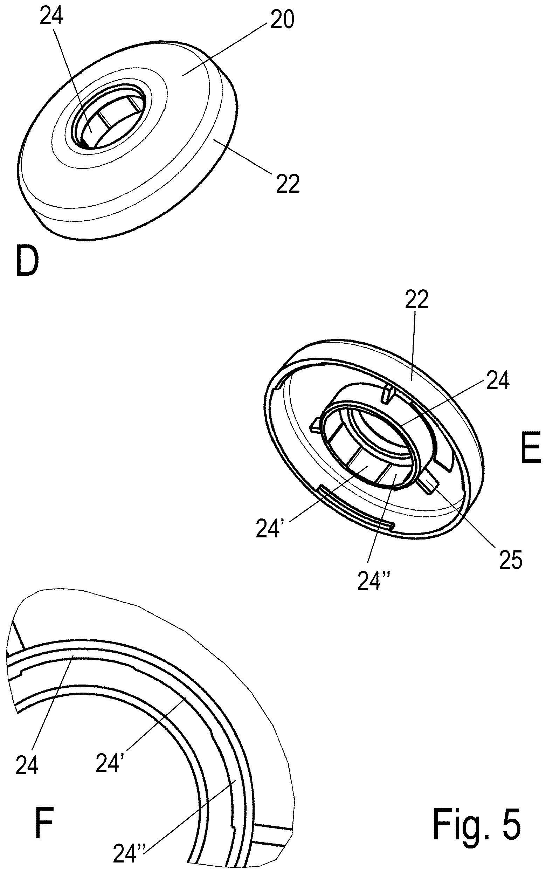

In den Figuren 5A bis 5F ist die Abdeckkappe 20 im Detail dargestellt, die an den Kopfabschnitt 8 der Klemmhülse 7 verrastet wird. Die Abdeckkappe 20 umfasst einen Klemmring 24, der innerhalb eines umlaufenden Randes 22 der Abdeckkappe 20 angeordnet ist. Die Abdeckkappe 20 umfasst eine mittlere Öffnung 21 zur Durchführung des Stabes 4. Am umlaufenden Rand 22 sind ein oder mehrere nach innen gerichtete Rastnasen 23 vorgesehen, die an der Stufe 19 des Kopfabschnittes 8 verrasten können.

Der Klemmring 24 umfasst Abschnitte 24' und 24" mit unterschiedlicher Dicke. Durch Drehen der Abdeckkappe 20 relativ zu der Klemmhülse 7 kann somit die Klemmkraft durch die Klemmbacken 9 verstellt werden. Gelangt in die Nut 10 zwischen der Stütze 11 und der Außenseite der Klemmbacke 9 ein Abschnitt 24' oder 24" mit größerer Dicke als der Abschnitt 24, wird die Klemmbacke 9 entsprechend stärker radial nach innen gedrückt und liegt mit größerer Klemmkraft an dem Stab 4 an. Dabei wird durch Drehen der Abdeckkappe 20 gleichzeitig die Klemmkraft an allen drei Klemmbacken 9 eingestellt, indem der Klemmring 24 drei Segmente mit einem dünneren Abschnitt 24, einem mitteldicken Abschnitt 24' und einem dickeren Abschnitt 24" umfasst. Zur Begrenzung der Drehbewegung der Abdeckkappe 20 sind radial hervorstehende Flügel 25 ausgebildet, die einen Anschlag ausbilden.

Die Klemmhülse 7 sowie die Abdeckkappe 20 können beide aus Kunststoff hergestellt werden und lassen sich einfach an einer Leiste 5 eines Sitzmöbels montieren. Die Kopfstütze 2 kann allerdings statt bei Möbeln auch bei anderen Sitzen eingesetzt werden, beispielsweise bei Fahrzeugsitzen.

### Bezugszeichenliste

- 1: Sitz
- 2: Kopfstütze
- 3: Bügel
- 4: Stab
- 5: Leiste
- 6: Haltevorrichtung
- 7: Klemmhülse
- 8: Kopfabschnitt
- 9: Klemmbacke
- 10: Aufnahme
- 11: Stütze
- 12: Mittelabschnitt
- 13: Rippen
- 14: Führungsabschnitt
- 15: Raststeg
- 16: Anlaufschräge
- 17: Vorsprung
- 18: Anlaufschräge
- 19: Stufe
- 20: Abdeckkappe
- 21: Öffnung
- 22: Rand
- 23: Rastnase
- 24: Klemmring
- 24': Abschnitt
- 24": Abschnitt
- 25: Flügel

## Patentansprüche

1. Haltevorrichtung (6) für eine Kopfstütze (2), mit einer Klemmhülse (7), in die ein Stab (4) einer Kopfstütze (2) einsteckbar ist, wobei an der Klemmhülse (7) mindestens eine bewegbare Klemmbacke (9) zum Festklemmen des Stabes (4) ausgebildet ist, wobei die mindestens eine Klemmbacke (9) relativ zur Klemmhülse (7) über einen drehbaren Klemmring (24) in radiale Richtung bewegbar ist und durch eine Drehbewegung des Klemmringes (24) eine Fixierung des Stabes (4) an der Klemmhülse (7) erfolgt, so dass der Stab (4) stufenlos entlang der Klemmhülse (7) verstellbar ist und der Klemmring (24) in eine nutförmige Aufnahme (10) zwischen der mindestens einen Klemmbacke (9) und einer Stütze (11) der Klemmhülse (7) eingefügt ist, wobei der Klemmring (24) Abschnitte (24', 24") unterschiedlicher Dicke aufweist und durch Drehen des Klemmringes (24) die mindestens eine Klemmbacke (9) radial bewegbar ist und mehrere Klemmbacken (9) vorgesehen sind, die zusammen über den Klemmring (24) bewegbar sind.

2. Haltevorrichtung nach Anspruch 1, **dadurch gekennzeichnet, dass** der Klemmring (24) an einer Abdeckkappe (20) ausgebildet ist, die eine Öffnung (21) zur Durchführung des Stabes (4) aufweist.

3. Haltevorrichtung nach Anspruch 2, **dadurch gekennzeichnet, dass** die Abdeckkappe (20) an der Klemmhülse (7) verrastbar ist.

4. Haltevorrichtung nach einem der vorhergehenden Ansprüche, **dadurch gekennzeichnet, dass** die Klemmhülse (7) axial beabstandet von der mindestens einen Klemmbacke (9) einen im Wesentlichen zylindrischen Führungsabschnitt (14) aufweist.

5. Haltevorrichtung nach einem der vorhergehenden Ansprüche, **dadurch gekennzeichnet, dass** die Klemmhülse (7) einen Kopfabschnitt (8) aufweist, der radial hervorsteht und an den Rand einer Öffnung einer Leiste (5) anlegbar ist.

6. Haltevorrichtung nach einem der vorhergehenden Ansprüche, **dadurch gekennzeichnet, dass** an dem Kopfabschnitt (8) die Klemmbacken (9) ausgebildet sind und an dem gegenüberliegenden Ende der Klemmhülse (7) ein Führungsabschnitt (14) für den Stab (4) vorgesehen ist.

7. Haltevorrichtung nach einem der vorhergehenden Ansprüche, **dadurch gekennzeichnet, dass** an der Klemmhülse (7) radial biegbare Raststege (15) ausgebildet sind, die beim Einstecken der Klemmhülse (7) in eine Öffnung in einer Leiste (2) die Leiste (2) hintergreifen.

8. Haltevorrichtung nach einem der vorhergehenden Ansprüche, **dadurch gekennzeichnet, dass** an einem Mittelabschnitt (12) der Klemmhülse (7) radial nach außen hervorstehende Rippen (13) ausgebildet sind.

9. Kopfstütze (2), mit mindestens zwei Haltevorrichtungen (6) nach einem der vorhergehenden Ansprüche und mit mindestens zwei Stäben (4), die jeweils an die Haltevorrichtung (6) festgelegt sind.

10. Kopfstütze (2) nach Anspruch 9,**dadurch gekennzeichnet, dass** die Stäbe (4) zylindrisch ausgebildet sind und stufenlos an den Haltevorrichtungen (6) verstellbar sind.

11. Kopfstütze (2) nach Anspruch 9 oder 10, **dadurch gekennzeichnet, dass** die Kopfstütze eine Leiste (5) umfasst, an der die mindestens zwei Haltevorrichtungen (6) fixiert sind und die Leiste (5) mit einem Bezugsstoff gepolstert ist.

## Claims

1. Holding device (6) for a headrest (2), comprising a clamping sleeve (7), into which a rod (4) of a headrest (2) can be inserted, wherein at least one movable clamping jaw (9) for clamping the rod (4) is formed on the clamping sleeve (7), wherein the at least one clamping jaw (9) can be moved in a radial direction relative to the clamping sleeve (7) via a rotatable clamping ring (24), and a fixing of the rod (4) to the clamping sleeve (7) takes place by a rotational movement of the clamping ring (24) such that the rod (4) is continuously adjustable along the clamping sleeve (7), and the clamping ring (24) is inserted into a groove-shaped recess (10) between the at least one clamping jaw (9) and a support (11) of the clamping sleeve (7), wherein the clamping ring (24) has portions (24', 24") of different thickness and the at least one clamping jaw (9) can be moved radially by rotating the clamping ring (24), and a plurality of clamping jaws (9) are provided which can be moved jointly via the clamping ring (24).

2. Holding device according to claim 1, **characterized in that** the clamping ring (24) is formed on a cover cap (20) which has an opening (21) for the passage of the rod (4).

3. Holding device according to claim 2, **characterized in that** the cover cap (20) can be latched onto the clamping sleeve (7).

4. Holding device according to one of the preceding claims, **characterized in that** the clamping sleeve (7) has a substantially cylindrical guide portion (14) at a distance from the at least one clamping jaw (9) in the axial direction.

5. Holding device according to one of the preceding claims, **characterized in that** the clamping sleeve (7) has a head portion (8) which projects radially and which can be placed onto the edge of an opening of a slat (5).

6. Holding device according to one of the preceding claims, **characterized in that** the clamping jaws (9) are formed on the head portion (8), and a guide portion (14) for the rod (4) is provided at the opposite end of the clamping sleeve (7).

7. Holding device according to one of the preceding claims, **characterized in that** radially flexible latching webs (15) are formed on the clamping sleeve (7), which engage behind a slat (5) when the clamping sleeve (7) is inserted into an opening in the slat (5).

8. Holding device according to one of the preceding claims, **characterized in that** radially outwardly projecting ribs (13) are formed on a middle portion (12) of the clamping sleeve (7) .

9. Headrest (2), comprising at least two holding devices (6) according to one of the preceding claims and comprising at least two rods (4) which are each fastened to the holding device (6).

10. Headrest (2) according to claim 9, **characterized in that** the rods (4) are of cylindrical shape and are continuously adjustable on the holding devices (6).

11. Headrest (2) according to claim 9 or 10, **characterized in that** the headrest comprises a slat (5), on which the at least two holding devices (6) are fixed, and the slat (5) is upholstered with a cover fabric.

## Revendications

1. Dispositif de fixation (6) pour un appuie-tête (2), avec une douille de serrage (7) dans laquelle une barre (4) d'un appuie-tête (2) peut être insérée, au moins un mors de serrage (9) mobile étant formé sur la douille de serrage (7) pour serrer et immobiliser la barre (4), l'au moins un mors de serrage (9) pouvant être déplacé par rapport à la douille de serrage (7) dans le sens radial à l'aide d'une bague de serrage (24) rotative et la fixation de la barre (4) sur la douille de serrage (7) étant réalisée par la rotation de la bague de serrage (24), de sorte que la barre (4) peut être ajustée sans crans le long de la douille de serrage (7), et la bague de serrage (24) étant insérée dans un logement en forme de rainure (10) entre l'au moins un mors de serrage (9) et un appui (11) de la douille de serrage (7), dans lequel la bague de serrage (24) présente des parties (24', 24") d'épaisseur différente et la rotation de la bague de serrage (24) permet de déplacer l'au moins un mors de serrage (9) dans le sens radial et il est prévu plusieurs mors de serrage (9) qui peuvent être déplacés ensemble à l'aide de la bague de serrage (24).

2. Dispositif de fixation selon la revendication 1, **caractérisé en ce que** la bague de serrage (24) est formée sur un capuchon (20) qui présente une ouverture (21) pour le passage de la barre (4).

3. Dispositif de fixation selon la revendication 2, **caractérisé en ce que** le capuchon (20) peut être enclenché sur la douille de serrage (7).

4. Dispositif de fixation selon l'une des revendications précédentes, **caractérisé en ce que** la douille de serrage (7) présente, à distance dans le sens axial de l'au moins un mors de serrage (9), une section de guidage (14) sensiblement cylindrique.

5. Dispositif de fixation selon l'une des revendications précédentes, **caractérisé en ce que** la douille de serrage (7) présente une partie de tête (8) qui dépasse dans le sens radial et peut être posée sur le bord d'une ouverture d'un bandeau (5).

6. Dispositif de fixation selon l'une des revendications précédentes, **caractérisé en ce que** les mors de serrage (9) sont formés sur la partie de tête (8) et une section de guidage (14) est prévue pour la barre (4) à l'extrémité opposée de la douille de serrage (7).

7. Dispositif de fixation selon l'une des revendications précédentes, **caractérisé en ce que** des barrettes d'enclenchement (15) flexibles dans le sens radial sont formées sur la douille de serrage (7) et passent derrière un bandeau (5) lors de l'insertion de la douille de serrage (7) dans une ouverture du bandeau (5).

8. Dispositif de fixation selon l'une des revendications précédentes, **caractérisé en ce que** des nervures (13) qui dépassent dans le sens radial vers l'extérieur sont formées sur une partie médiane (12) de la douille de serrage (7).

9. Appuie-tête (2) avec au moins deux dispositifs de fixation (6) selon l'une des revendications précédentes et avec au moins deux barres (4) qui sont fixées chacune au dispositif de fixation (6).

10. Appuie-tête (2) selon la revendication 9, **caractérisé en ce que** les barres (4) ont une forme cylindrique et sont ajustables sans crans sur les dispositifs de fixation (6).

11. Appuie-tête (2) selon la revendication 9 ou 10, **caractérisé en ce qu'**il comprend un bandeau (5) sur lequel les au moins deux dispositifs de fixation (6) sont fixés et le bandeau (5) est rembourré avec une matière d'habillage.
